(19) Europäisches Patentamt
European Patent Office
Office européen des brevets

(11) EP 1 034 945 A1

(12) **EUROPEAN PATENT APPLICATION**
published in accordance with Art. 158(3) EPC

(43) Date of publication:
**13.09.2000 Bulletin 2000/37**

(21) Application number: **99931492.5**

(22) Date of filing: **22.07.1999**

(51) Int. Cl.$^7$: **B60C 11/11**, B60C 11/12

(86) International application number:
**PCT/JP99/03932**

(87) International publication number:
**WO 00/06398 (10.02.2000 Gazette 2000/06)**

(84) Designated Contracting States:
**DE ES FR GB IT**

(30) Priority: **29.07.1998 JP 21393198**
**29.07.1998 JP 21393298**
**29.07.1998 JP 21393398**
**29.07.1998 JP 21393598**
**29.07.1998 JP 21393698**

(71) Applicant:
**BRIDGESTONE CORPORATION**
**Tokyo 104-0031 (JP)**

(72) Inventors:
- **KUKIMOTO, Takashi**
  **Kodaira-shi, Tokyo 187-0031 (JP)**
- **FUNATO, Naomichi**
  **Kodaira-shi, Tokyo 187-0031 (JP)**
- **YAMAMOTO, Shinya**
  **Kodaira-shi, Tokyo 187-0031 (JP)**
- **IKUNO, Toshifumi**
  **Sayama-shi, Saitama 350-1306 (JP)**
- **KOBAYASHI, Takashi**
  **Kodaira-shi, Tokyo 187-0031 (JP)**

(74) Representative:
**Whalley, Kevin et al**
**MARKS & CLERK,**
**57-60 Lincoln's Inn Fields**
**London WC2A 3LS (GB)**

(54) **PNEUMATIC TIRE**

(57) This invention is concerned with a pneumatic tire, particularly heavy duty pneumatic radial tire improving resistance to uneven wear, resistance to noise and the like without damaging wet performance and steering stability on dry road surface, and provides a block type tread pattern comprised of at least three main grooves extending in a central region of a tread in a circumferential direction, a row of S-shaped or Z-shaped blocks arranged between the main grooves, in which adjoining blocks in such a row are partly overlapped with each other in the circumferential direction, and a row of shoulder blocks arranged in both side regions of the tread.

FIG. 3

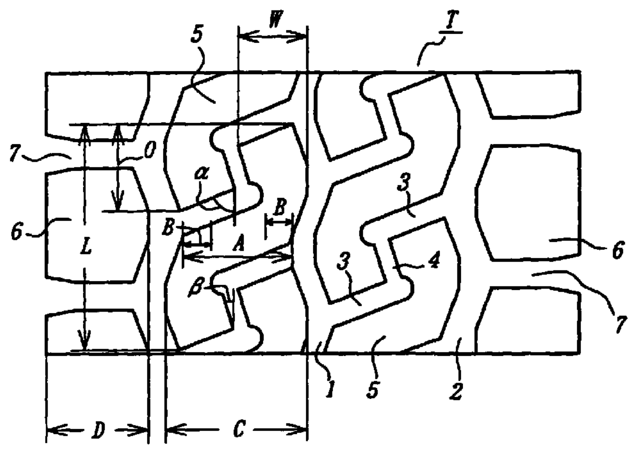


EP 1 034 945 A1

Printed by Xerox (UK) Business Services
2.16.7 (HRS)/3.6

## Description

### Technical Field

This invention relates to a pneumatic tire and more particularly to a heavy duty pneumatic radial tire having a block pattern as a tread pattern of the tire. It is concerned with a technique for improving performances such as uneven wear resistance, wear life, noise resistance and the like without damaging braking property and steering stability on wet road surface (hereinafter referred to as wet performances) and steering stability on dry road surface.

### Background Art

In the pneumatic radial tires for use in heavy duty vehicles such as truck, bus and the like, rib-lug type tread pattern and lug-block type tread pattern are widely used from the old time.

In the conventional heavy duty pneumatic radial tire, when the tread pattern is rib-lug type, the wear resistance of the tire is excellent, but the edge effect at a central zone of the tread is insufficient and there is a problem in the wet performances. Alternatively, when the tread pattern is lug-block pattern, the wet performances are excellent, but the block rigidity at the central zone of the tread is low and there is a problem that the steering stability on dry road surface and wear resistance are lacking.

In order to simultaneously establish the improvement of the wet performances and the improvement of the steering stability on dry road surface without lowering the wear resistance, as proposed in JP-A-6-8711, a tread pattern of a pneumatic radial tire provided with at least three main grooves extending zigzag in a central zone of a tread along an outer periphery thereof and many cut-out grooves extending in both side zones of the tread toward the main groove but not reaching to the main groove is a lug-block type tread pattern as shown in Fig. 1 wherein each of land rows sandwiched between the mutual main grooves is an arrangement of substantially S-shaped blocks defined by branched grooves alternately cut out from the main grooves at their entry concave corner portions in parallel to each other for dividing the land row and connection grooves each alternately connecting the adjoining branched grooves.

In the lug-block type tread pattern proposed in the above publication, however, the uneven wear resistance, wear life, noise resistance and the like are improved, but there is a problem that the steering stability on wet road surface and ice-snow performances are degraded because the shoulder portion is a rib including lug grooves.

Furthermore, in pneumatic radial tires for all seasons and heavy duty pneumatic radial tires thinking the braking and traction performances important, a block type tread pattern is widely used because lateral grooves are effective for creating the braking and traction performances on ice-snow road surfaces. In general, the block type tread pattern has a problem on uneven wear because heel and toe wear inherent to the block pattern is apt to be caused, and a problem that the wearing rate due to the uneven wear becomes faster to lower the wear life. And also, there is a problem that various noises based on the block pattern such as striking sound of block edge, slip sound at block edge due to slippage, air pumping sound due to the change of groove volume in the contacting with ground and the like are created to degrade the noise resistance.

In this connection, the arrangement of S-shaped or Z-shaped blocks is proposed as a block type tread pattern, which is a structure that such S-shaped or Z-shaped blocks are arranged on the central portion of the tread in the circumferential direction as only one row and usual second block row and shoulder row are arranged on both sides thereof as shown in Fig. 2. In such a block type tread pattern, however, the block rigidity and block edge component of the second block row are lacking, so that such a pattern is not necessarily satisfied in view of uneven wear resistance, snow-ice performances, wet performances and noise resistance.

### DISCLOSURE OF THE INVENTION

It is an object of the invention to provide a pneumatic tire, particularly a heavy duty pneumatic radial tire having a novel block type tread pattern capable of improving the uneven wear resistance, wear life and noise resistance without damaging the wet performances and the steering stability on dry road surface.

It is another object of the invention to provide a pneumatic tire, particularly a heavy duty pneumatic radial tire having a novel block type tread pattern capable of improving the snow-ice performances, wet performances, uneven wear resistance and noise resistance.

In order to achieve the above objects, the invention lies in a pneumatic tire having a block type tread pattern, which comprises at least three main grooves extending on a central portion of a tread in a circumferential direction of the tire, a S-shaped or Z-shaped block row arranged between the main grooves, wherein adjoining blocks in such a row are partly overlapped with each other in the circumferential direction, and a shoulder block row arranged on each of both sides of the tread.

In a preferable embodiment of the invention, the S-shaped or Z-shaped block is offset to the shoulder block in the circumferential direction so as not to align grooves defining these blocks in a line in a lateral direction.

And also, it is favorable that an overlap amount of the adjoining S-shaped blocks is 15~45% of a circumferential length of the block in the S-shaped or Z-shaped block row.

Furthermore, it is favorable that a branched groove connecting the adjacent main grooves to each other for forming the S-shaped or Z-shaped block has two or more bending points and a groove depth of the branched groove in the vicinity of the main groove is substantially equal to a groove depth of the main groove and a groove depth of the connecting portion of the branched groove connecting neighborhoods of the main grooves in a central portion of the block is made shallower than the groove depth of the main groove. In this case, it is preferable that a width (B) of the branched groove in the vicinity of the main groove and a width (A) of the block in the central portion of the block satisfy the following relationship:

$$0.1 \times A \leq B \leq 0.40 \times A$$

Moreover, it is favorable that an inclination angle $\alpha$ of the branched groove for the formation of the S-shaped or Z-shaped block in the vicinity of the main groove with respect to an equator of the tire and an inclination angle $\beta$ of the connecting portion of the branched groove are $45° \leq \alpha \leq 90°$ and $0° \leq \beta \leq 45°$.

In the S-shaped or Z-shaped block, it is favorable that a width of a circumferential edge portion of the block in an axial direction of the tire is 20~60% of the circumferential length of the block and a maximum width in the axial direction of the tire is 1.0-1.6 times a maximum width of the shoulder block in the axial direction of the tire.

Furthermore, the two rows of the S-shaped or Z-shaped blocks arranged in the central portion of the tread preferably form a directional pattern.

According to a second aspect of the invention, there is the provision of a pneumatic tire having a block type tread pattern, which comprises main grooves extending in a circumferential direction of a tread, at least one row of S-shaped or Z-shaped blocks sandwiched between the mutual main grooves in a central portion of the tread, block rows arranged on both sides of the block row and a row of shoulder blocks arranged on each of both sides of the tread, wherein adjoining S-shaped or Z-shaped blocks in the circumferential direction are overlapped in a ratio of 15~45% of a circumferential length of the block and the overlapped portion is defined by a fine groove inclined at an angle of 0~50° with respect to the circumferential direction of the tire.

In the pneumatic radial tire according to the invention, the tread pattern is constituted with at least three main grooves extending on the central portion of the tread in the circumferential direction, S-shaped or Z-shaped block row arranged between the main grooves wherein adjoining blocks in the row are partly overlapped with each other in the circumferential direction and a row of shoulder blocks arranged on each side of the tread, whereby the rigidity and edge component per unit area of the block are increased to improve wear resistance, wear life, wet performances, snow-ice performances, noise resistance and drainage property. Particularly, the block edge component effective for the braking and traction forces can be increased without lowering the block rigidity in the central portion of the tread to improve t he steering stability on wet road surface and dry road surface.

In the block type tread pattern according to the invention, the S-shaped or Z-shaped block is offset from the shoulder block in the circumferential direction so as not to align grooves defining these blocks in a line in the lateral direction, whereby the occurrence of uneven wear inherent to the block pattern, particularly heel and toe wear can be controlled.

In the invention, the branched grooves each connecting the adjacent main grooves to each other in the central portion of the tread and having two or more bending points are arranged at a given interval in the circumferential direction of the tread, whereby a row of plural S-shaped or Z-shaped blocks is formed between the adjacent main grooves. In this case, the adjoining blocks in the row are partly overlapped with each other in the circumferential direction, and the overlap amount is 15~45%, preferably 35~40% of the circumferential length of the block. When the adjoining S-shaped or Z-shaped blocks are overlapped, the movement of the block is decreased to improve the uneven wear resistance and also the tire noise is reduced. The overlap amount is favorable to be large for decreasing the movement of individual block and is necessary to be 15% of the circumferential block length at minimum. However, when it exceeds 45%, the circumferential end portion of each block shape becomes sharp and the movement of the block end portion is rather increased and hence the uneven wear resistance is poor and the tire noise is unfavorably increased.

In the branched groove bent in S-shaped or Z-shaped form between the adjacent main grooves, the groove depth of the branched groove in the vicinity of the main groove is substantially equal to that of the main groove and the groove depth of the connecting portion of the branched groove neighborhoods of the main grooves in the central portion of the block is made shallower than that of the main groove, preferably not more than 1/2 thereof. Thus, the rigidity of the S-shaped or Z-shaped block can be increased and the deformation amount of the block can be decreased. However, when the groove depth of the branched groove as a whole is made shallower than the groove depth of the main groove, the wet performances at the last worn stage lower, so that it is necessary that the groove depth in the vicinity of the main groove is made substantially equal to that of the main groove.

In this case, the width (B) of the branched groove in the vicinity of the main groove and the width (A) of the block in the central portion of the block satisfy a relationship of $0.1 \times A \leq B \leq 0.40 \times A$, preferably $0.30 \times A \leq B \leq 0.35 \times A$.

The S-shaped or Z-shaped block defined between the adjoining branched grooves and the main grooves is 8 in the number of sides when the main groove is a straight groove, and 8 or more in the number of sides when the main groove is a zigzag groove. When the number of sides is 8 or more, it is more advantageous to simultaneously establish the steering stability and the uneven wear resistance.

It is favorable that the inclination angle α of the branched groove for the formation of the S-shaped or Z-shaped block in the vicinity of the main groove with respect to the equator of the tire and the inclination angle β of the connecting portion of the branched groove are $45° \leq \alpha \leq 90°$ and $0° \leq \beta \leq 45°$, respectively. Particularly, the inclination angles α, β are preferable to be about 75° and 30°. When the inclination angle α is less than 45° and the inclination angle β exceeds 45°, the end portion of the block becomes too sharp and hence the rigidity of the end portion of the block is lowered to bring about the increase of the block movement.

In the S-shaped or Z-shaped block having the above structure, it is particularly important to rationalize a ratio of width to length of the block. That is, as the ratio of width/length of such a block is increased, the edge component in the axial direction of the tire increases, but the rigidity of the block in the circumferential direction of the tire lowers, so that it tends to decrease the ground contact property of the block and lower the wet performances. In the S-shaped or Z-shaped block, therefore, the width of circumferential edge portion of the block in the axial direction of the tire is made 20~60%, preferably 30~50% of the block circumferential length. In this case, the wet performances are improved and also the block rigidity can sufficiently be ensured.

And also, the maximum width of the S-shaped or Z-shaped block in the axial direction of the tire is 1.0~1.6 times, preferably about 1.4 times the maximum width of the shoulder block in the axial direction of the tire. When the ratio of such maximum widths is less than 1.0 times, the edge component in the S-shaped or Z-shaped block decreases and also the groove area decreases to lower the wet performances, while when it exceeds 1.6 times, the block rigidity unfavorably decreases to lower the uneven wear resistance.

Further, the two rows of the S-shaped or Z-shaped blocks arranged in the central portion of the tread preferably form a directional pattern. Particularly, when the adjoining two block rows are arranged substantially in an axial symmetry with respect to the equator of the tire, the snow-ice performances, wet performances and noise resistance are improved in addition to the uneven wear resistance. Thus, when the S-shaped or Z-shaped blocks are arranged so as to form the directional pattern as mentioned above, water can be flowed into left and right directions, so that when the tire is run on wet road surface, the effective ground contact area can be ensured by rapid drainage and hence the traction and braking properties in rainy weather can be improved. And also, air flowing in the ground contact region produced by deformation and vibration of the block during the running under loading is rapidly discharged from the ground contact region to remove air stagnation or collision of air flows and the noise resistance (silentness) is also improved.

Moreover, the central portion of the S-shaped or Z-shaped block may be divided by a sipe or a fine groove having a groove depth corresponding to not more than 1/2 of the depth of the main groove. In this case, the number of sides in the divided block is at least 6. And also, at least adjacent sides of the S-shaped or Z-shaped block are connected to each other through a curved line or all corner parts of the block are curved at a given curvature, whereby it may be attempted to more improve the drainage property.

In the second aspect of the invention, the block type tread pattern is comprised of main grooves extending in the circumferential direction of the tread, at least one row formed by dividing a land portion sandwiched between the main grooves in the central portion of the tread by branched grooves extending from the main groove into the land portion and a fine groove connecting the branched grooves to each other and inclined at an angle of 0~50° with respect to the circumferential direction of the tire, block rows arranged on both sides of such a block row, and a shoulder block row arranged on each side of the tread, wherein the adjoining S-shaped or Z-shaped blocks in the circumferential direction are overlapped with each other at a ratio of 15~45% of the block circumferential length. Thus, stone biting produced in the groove at the overlapped portion of the blocks during the running of the tire can be prevented by the fine groove, and as a result the occurrence of cracking based on strain at the groove bottom due to the stone biting can also be controlled. For this end, the width of the fine groove is preferable to be not more than 3 mm considering the prevention of stone biting.

When the fine groove is arranged at an inclination angle of 0~50° with respect to the equator of the tire in the overlapped portion of the adjoining S-shaped or Z-shaped blocks in the circumferential direction, the size of the block may be maximized to prevent the lowering of the block rigidity and hence the movement of the block during the running of the tire. When the inclination angle exceeds 50°, the edge portion of the block in the circumferential direction becomes sharp to lower the rigidity at the edge portion of the block and hence bring about the increase of the movement of the block. Preferably, the inclination angle is 2~30°.

BRIEF DESCRIPTION OF THE DRAWINGS

Fig. 1 is a partially developed plan view of a tread illustrating an embodiment of the conventional tread pattern.

Fig. 2 is a partially developed plan view of a tread illustrating another embodiment of the conventional tread pattern.

Fig. 3 is a partially developed plan view of a tread illustrating a first embodiment of the block type tread pattern according to the invention.

Fig. 4 is a partially developed plan view of a tread illustrating a second embodiment of the block type tread pattern according to the invention.

Fig. 5 is a partially developed plan view of a tread illustrating a third embodiment of the block type tread pattern according to the invention.

Fig. 6 is a partially developed plan view of a tread illustrating a fourth embodiment of the block type tread pattern according to the invention.

Fig. 7 is a partially developed plan view of a tread illustrating a fifth embodiment of the block type tread pattern according to the invention.

Fig. 8 is a partially developed plan view of a tread illustrating a sixth embodiment of the block type tread pattern according to the invention.

Fig. 9 is a partially developed plan view of a tread illustrating a seventh embodiment of the block type tread pattern according to the invention.

Fig. 10 is a partially developed plan view of a tread illustrating an eighth embodiment of the block type tread pattern according to the invention.

Fig. 11 is a partially developed plan view of a tread illustrating a block type tread pattern as a comparative example.

Fig. 12a is a graph showing a relation between B/A and wet performance in the tire of Example 1.

Fig. 12b is a graph showing a relation between B/A and circumferential block rigidity.

Fig. 13 is a graph showing a relation between W/L and wet braking property in the tire of Example 1.

Fig. 14 is a graph showing a relation among C/D, wet performance and resistance to uneven wear in the tire of Example 1.

Fig. 15 is a graph showing a relation between speed and passing noise in the tire of Example 4.

BEST MODE FOR CARRYING OUT THE INVENTION

Then, an embodiment of the block type tread pattern according to the invention will be described with reference to the drawings.

A first embodiment of the block type tread pattern used in the heavy duty pneumatic radial tire according to the invention is shown in Fig. 3 as a partially developed plan view of a tread. In this figure, numerals 1, 2 are three main grooves extending zigzag in a central portion of a tread T along an outer circumference thereof, or central main groove 1 and both side main grooves 2. Numerals 3 are branched grooves arranged in parallel to each other in a land portion sandwiched between the adjacent main grooves 1 and 2 and alternately cut out from the main grooves 1 and 2 at their side corner parts. Numeral 4 is a connecting portion connecting these adjoining branched groove portions 3 on alternate branched groove portion. Numeral 5 is a Z-shaped block defined by the main grooves 1, 2 and the branched groove 3 provided with the connecting portion 4. Numeral 6 is a shoulder block defined by lateral grooves 7 arranged in both side regions of the tread or both shoulder portions at given intervals in the circumferential direction of the tire.

As shown in Fig. 3, block edge component effective for braking and traction forces can be increased in the central region of the tread by block rows comprised of the Z-shaped blocks 5 formed in the land portion in the central region of the tread without lowering the block rigidity, whereby the steering stability on wet road surface and dry road surface can be improved. And also, each of the blocks has two or more bending points and number of sides of 8 or more, which is advantageous to prevent the lowering of the wear resistance together with the improvement of the steering stability.

The Z-shaped blocks 5 in the central region of the tread are offset to the shoulder blocks 6 in both side regions of the tread by 1/2 pitch in t he circumferential direction so as not to align the grooves 3 and 7 defining these blocks in a line in the lateral direction as shown in Fig. 3.

The overlap amount (O) of the adjoining Z-shaped blocks 5 in the circumferential direction is within a range of 15~45% of the circumferential length (L) of the block.

In the branched groove 3 formed in Z-shaped bend form between the adjoining main grooves 1 and 2, the groove depth of the branched groove in the vicinity of the main groove is substantially equal to the groove depth of the main groove 1, 2 and the groove depth of the connecting portion 4 connecting neighborhoods of the main grooves in the central portion of the block is shallower than the groove depth of the main groove, preferably not more than 1/2 thereof. Moreover, the block may be divided by forming a sipe or a fine groove (not shown) in the central portion of the block 5. In this case, the width (B) of the branched groove 3 in the vicinity of the main groove is within a range of $0.1 \times A \leq B \leq 0.40 \times A$ to the width (A) of the block in the central portion of the block.

In the branched groove 3 for the formation of the Z-shaped block 5, the inclination angle $\alpha$ in the vicinity of the main groove with respect to the equatorial plane of the tire and the inclination angle $\beta$ of the connecting portion 4 in the branched groove 3 are within ranges of $45° \leq \alpha \leq 90°$ and $0° \leq \beta \leq 45°$, respectively.

In the Z-shaped block 5, the width (W) of the circumferential edge portion in the axial direction of the tire is within a range of 20~60% of the block circumferential length (L). And also, the maximum width (C) of the Z-shaped block 5 in the axial direction of the tire within a range of 1.0~1.6 times the maximum width (D) of the shoulder block 6 in the axial direction of the tire.

A second embodiment of the block type tread pattern used in the heavy duty pneumatic radial tire according to the invention is shown in Fig. 4 as a partially developed plan view. In this case, two rows of blocks 5 formed between the adjoining main grooves 1 and 2 are arranged substantially in a relation of axial symmetry with respect to the equatorial plane of the tire in the central region of the tread. That is, these blocks form a directional pattern, so that water flow or air flow in the ground contact zone is directed in the same right and left directions to rapidly discharge toward the outside of the ground contact zone as shown by an arrow in Fig. 4. In the embodiment of Fig. 4, the other dimensions are the same as in Fig. 3.

Fig. 5 shows a third embodiment of the block type tread pattern according to the invention. In this case, three rows of Z-shaped blocks are formed in the central region of the tread by two circumferential center grooves 1 and two circumferential side grooves 2.

Fig. 6 shows a fourth embodiment of the block type tread pattern according to the invention. In this case, four rows of Z-shaped blocks are formed in the central region of the tread by three circumferential center grooves 1 and two circumferential side grooves 2.

Fig. 7 shows a fifth embodiment of the block type tread pattern according to the invention, which is a modified embodiment of Fig. 4. In this case, only the form and the number of sides in the Z-shaped block 5 are different from those of Fig. 4.

Figs. 8 and 9 show sixth and seventh embodiments of the block type tread pattern according to the invention, respectively. In this case, the S-shaped or Z-shaped block 5 is divided into two small block segments 5-1, 5-2 by forming a sipe of a fine groove 8 in the central portion of the block for further enhancing the water drainage.

Fig. 10 shows an eighth embodiment of the block type tread pattern according to the invention. In this case, two central main grooves 1 and side main grooves 2 extending zigzag along the outer circumference are formed in the central region of the tread T. A center block row comprised of Z-shaped blocks 10 is formed by arranging branched grooves 3 in a land portion sandwiched between the adjoining main grooves 1 in parallel to each other so as to alternately cut out from the main grooves 1 at their side corner parts and arranging fine grooves or sipes 9 so as to connect the adjoining branched groove portions 3 to each other on alternate branched groove portion. And also, a land portion sandwiched between the main grooves 1 and 2 is divided by lateral grooves 11 arranged in parallel to each other to form a block row comprised of second blocks 12. Numeral 6 is a shoulder block defined by lateral grooves 7 arranged at given intervals in both side regions of the tread T or in both shoulder portions in the circumferential direction of the tire.

In the center block row, the overlap amount (O) between the adjoining Z-shaped blocks 10 is within a range of 15~45% of the circumferential block length (L) likewise the case of Fig. 3. And also, the inclination angle $\theta$ of the sipe 9 with respect to the equatorial plane of the tire is within a range of 0~50° and the width of the sipe is not more than 3 mm.

The following examples are given in illustration of the invention and are not intended as limitations thereof.

<u>Examples 1~3, Comparative Examples 1~2</u>

In this example, a heavy duty pneumatic radial tire having a tire size of TBR11R22.5 14PR mounted onto a rim of $22.5 \times 7.50$ is provided as a test tire. Moreover, this tire has the same structure as in the conventionally used tire.

Each tire of Examples 1~3 has a block type tread pattern shown in Fig. 3 wherein a central main groove 1 (groove width: 7.5 mm, groove depth: 16.2 mm) and both side main grooves 2 (groove width: 12.0 mm, groove depth: 16.7 mm) are arranged in a central region of a tread T. The number of main grooves, number of rows of S- or Z-shaped blocks, overlap amount between adjoining blocks (%), B/A and inclination angles $\alpha$, $\beta$ in such a pattern are shown in Table 1.

The tire of Comparative Example 1 has a block type tread pattern shown in Fig. 11 as a control, and the tire of Comparative Example 2 has a block type tread pattern shown in Fig. 2. The dimensions of these patterns are also shown in Table 1.

Each of these tires is mounted onto a vehicle of 2D4 under an internal pressure of 8.0 $kgf/cm^2$ and actually run on a route composed mainly of an express way (express way : general-purpose road is about 90:10) to evaluate resistance to uneven wear, wear life and noise. The resistance to uneven wear and wear life are represented by an index on the basis that Comparative Example 1 is 100, wherein the larger the index value, the better the property. The noise (dB/A) is represented by increment or decrement to Comparative Example 1 as a control. The evaluated results are also shown in Table 1.

Table 1

| | Comparative Example 1 | Example 1 | Example 2 | Example 3 | Comparative Example 2 |
|---|---|---|---|---|---|
| Number of main grooves | 4 | 3 | 3 | 3 | 4 |
| Number of S- or Z-shaped block rows | 0 | 2 | 2 | 2 | 1 |
| Overlap amount (%) | 10 | 38 | 43 | 17 | 37 |
| B/A | - | 0.33 | 0.33 | 0.33 | 0.30 |
| $\alpha$ | 75° | 75° | 90° | 45° | 75° |
| $\beta$ | - | 30° | 45° | 0° | 30° |
| Resistance to uneven wear (index) | 100 | 220 | 140 | 160 | 110 |
| Wear life (index) | 100 | 140 | 120 | 120 | 110 |
| Noise (dB/A) | control | -1.4 | -1.8 | -0.5 | +0.5 |

In the tire of Example 1, the wet performance and circumferential rigidity are measured by changing the ratio B/A in the block to obtain results as shown in Fig. 12(a) and Fig. 12(b). Moreover, the wet performance is represented by an index on the basis that the data at B/A of 0.5 when the depth of the remaining main groove is 6 mm at last wearing is 100, and the circumferential rigidity is represented by an index on the basis that the data in new tire is 100. The larger the index value, the better the property. As seen from the results of Fig. 12, the ratio B/A is favorable to be within a range of 0.1~0.4.

Further, the braking property on wet road surface (wet braking property) is evaluated by changing the width (W) of circumferential edge portion in the Z-shaped block in the tire of Example 1 to the circumferential length (L) of such a block to obtain a results as shown in Fig. 13. The raking property is represented by an index on the basis that Comparative Example 2 is 100, wherein the larger the index value, the better the property. As seen from Fig. 13, the wet braking property is improved to 110~120% when the ratio W/L is within a range of 20~60%.

Moreover, the wet performance and resistance to uneven wear are evaluated by an actual running test while changing a ratio of maximum width (C) of the Z-shaped block in the axial direction to maximum width (D) of the shoulder block in the axial direction in the tire of Example 1 to obtain results as shown in Fig. 14. These performances are represented by an index on the basis that Comparative Example 2 is 100, wherein the larger the index value, the better the performance. As seen from Fig. 14, the wet performance and the resistance to uneven wear are established when the ratio C/D is 100~160%, and particularly they are highly established at the value of about 140%.

<u>Example 4</u>

In this example is prepared a heavy duty pneumatic radial tire having a block type tread pattern shown in Fig. 4 and a tire size of TBR11R22.5 14PR. In this pattern, the number of main grooves is 3 and O/L is 38%.

This tire is mounted onto a vehicle of 2-D4 under an internal pressure of 8.0 kgf/$cm^2$ and run on an iron plate road at a speed of 40 km/hr under a constant-volume load and a water depth of 3 mm, during which a rapid braking is taken to measure a braking distance as a wet braking property. And also, the cornering is carried out on wet road surface to evaluate wet cornering performance. When the evaluated results are represented by an index on the basis that Comparative Example 2 is 100 (the smaller he index value, the better the property), the tire of this example is 85 in the wet braking property and 90 in the wet cornering performance and hence the wet performances are largely improved.

Furthermore, the passing noise (dB/A) at the actual running speed is measured to obtain results as shown in Fig. 15. As seen from Fig. 15, the noise is reduced at all running speeds as compared with the tire of Comparative Example 2.

Example 5

In this example is prepared a heavy duty pneumatic radial tire having a block type tread pattern shown in Fig. 10 and a tire size of TBR11R22.5 14PR. In this pattern, the number of main grooves is 4, and the number of Z-shaped block rows is 1, and O/L is 38%, and the sipe has a width of 0.7 mm and an inclination angle θ of 5°.
This tire is mounted onto a vehicle of 2-D4 under an internal pressure of 8.0 kgf/$cm^2$ and subjected to an actual running test. As a result, the resistance to uneven wear is represented by an index on the basis that Comparative Example 2 is 100 and is as good as 110. And also, the number of stone biting by the sipe per the tire at 10% wearing is zero, while that in the tire of Comparative Example 2 is 5.

INDUSTRIAL APPLICABILITY

In the pneumatic tire, particularly heavy duty pneumatic radial tire according to the invention, the resistance to uneven wear, wear life and resistance to noise can be improved without damaging the steering stability on not only dry road surface but also wet road surface, and it can be attempted to improve performances on snow and ice, traction performance, resistance to stone biting and the like. Therefore, it can advantageously be used as an all-season tire or a tire thinking that the braking and traction performances are important.

**Claims**

**1.** A pneumatic tire having a block type tread pattern, which comprises at least three main grooves extending on a central portion of a tread in a circumferential direction of the tire, a S-shaped or Z-shaped block row arranged between the main grooves, wherein adjoining blocks in such a row are partly overlapped with each other in the circumferential direction, and a shoulder block row arranged on each of both sides of the tread.

**2.** A pneumatic tire according to claim 1, wherein the S-shaped or Z-shaped block is offset to the shoulder block in the circumferential direction.

**3.** A pneumatic tire according to claim 1, wherein an overlap amount of the adjoining S-shaped blocks is 15~45% of a circumferential length of the block in the S-shaped or Z-shaped block row.

**4.** A pneumatic tire according to claim 1, wherein a branched groove connecting the adjacent main grooves to each other for forming the S-shaped or Z-shaped block has two or more bending points and a groove depth of the branched groove in the vicinity of the main groove is substantially equal to a groove depth of the main groove and a groove depth of the connecting portion of the branched groove connecting neighborhoods of the main grooves in a central portion of the block is made shallower than the groove depth of the main groove.

**5.** A pneumatic tire according to claim 4, wherein a width (B) of the branched groove in the vicinity of the main groove and a width (A) of the block in the central portion of the block satisfy the following relationship:

$$0.1 \times A \leq B \leq 0.40 \times A.$$

**6.** A pneumatic tire according to claim 4, wherein an inclination angle α of the branched groove for the formation of the S-shaped or Z-shaped block in the vicinity of the main groove with respect to an equator of the tire and an inclination angle β of the connecting portion of the branched groove are $45° \leq \alpha \leq 90°$ and $0° \leq \beta \leq 45°$.

**7.** A pneumatic tire according to claim 1, wherein a width of a circumferential edge portion of the block in an axial direction of the tire is 20~60% of the circumferential length of the block.

**8.** A pneumatic tire according to claim 1, wherein a maximum width in the axial direction of the tire is 1.0-1.6 times a maximum width of the shoulder block in the axial direction of the tire.

**9.** A pneumatic tire according to claim 1, wherein the two rows of the S-shaped or Z-shaped blocks arranged in the central portion of the tread form a directional pattern.

**10.** A pneumatic tire having a block type tread pattern, which comprises main grooves extending in a circumferential direction of a tread, at least one row of S-shaped or Z-shaped blocks sandwiched between the mutual main grooves in a central portion of the tread, block rows arranged on both sides of the block row and a row of shoulder blocks arranged on each of both sides of the tread, wherein adjoining S-shaped or Z-shaped blocks in the circumferential direction are overlapped in a ratio of 15~45% of a circumferential length of the block and the overlapped portion is defined by a fine groove inclined at an angle of 0~50° with respect to the circumferential direction of the tire.

**11.** A pneumatic tire according to claim 10, wherein the fine groove has a width of not more than 3 mm.

FIG. 1

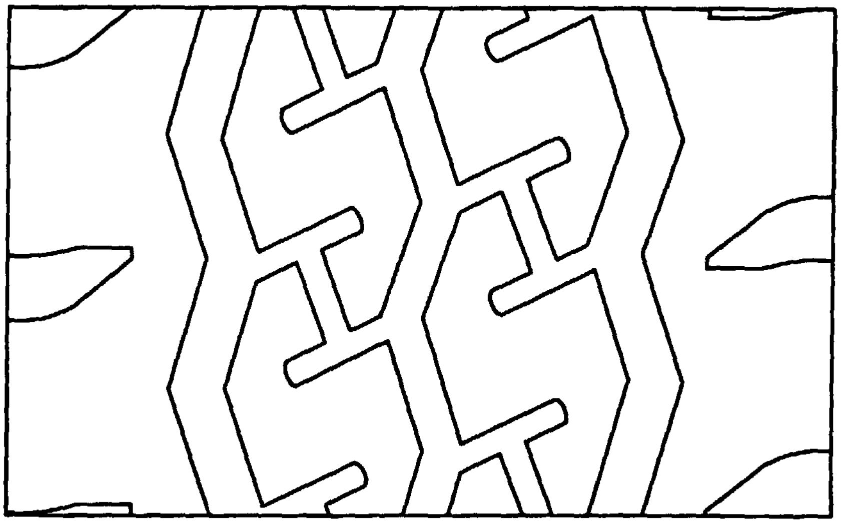

FIG. 2

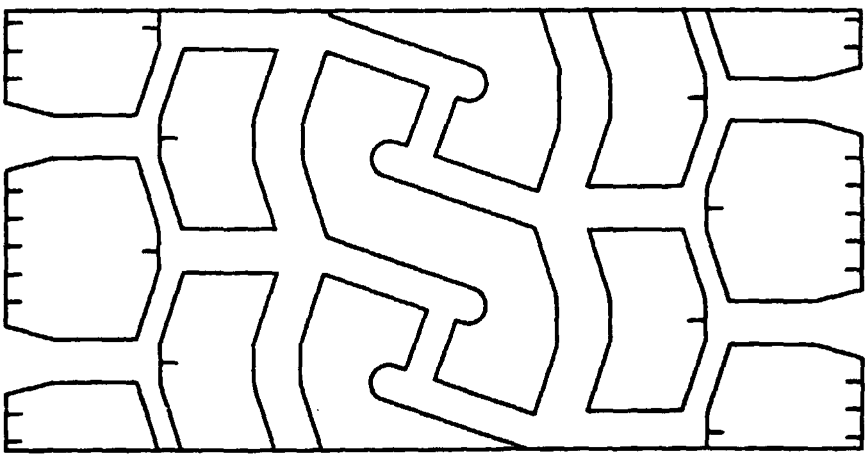

FIG. 3

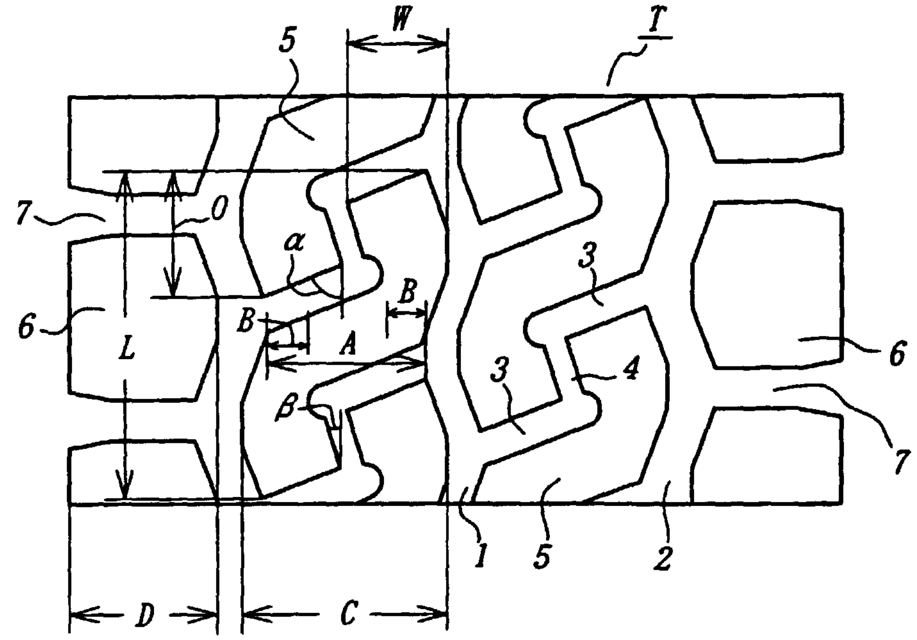


FIG. 4

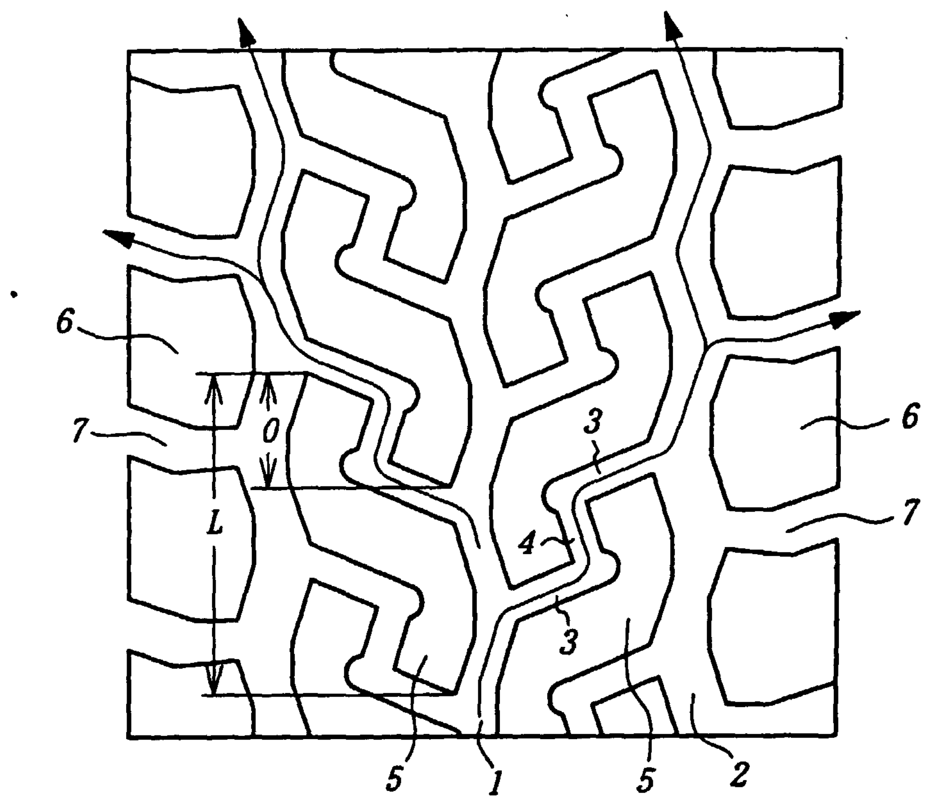

FIG. 5

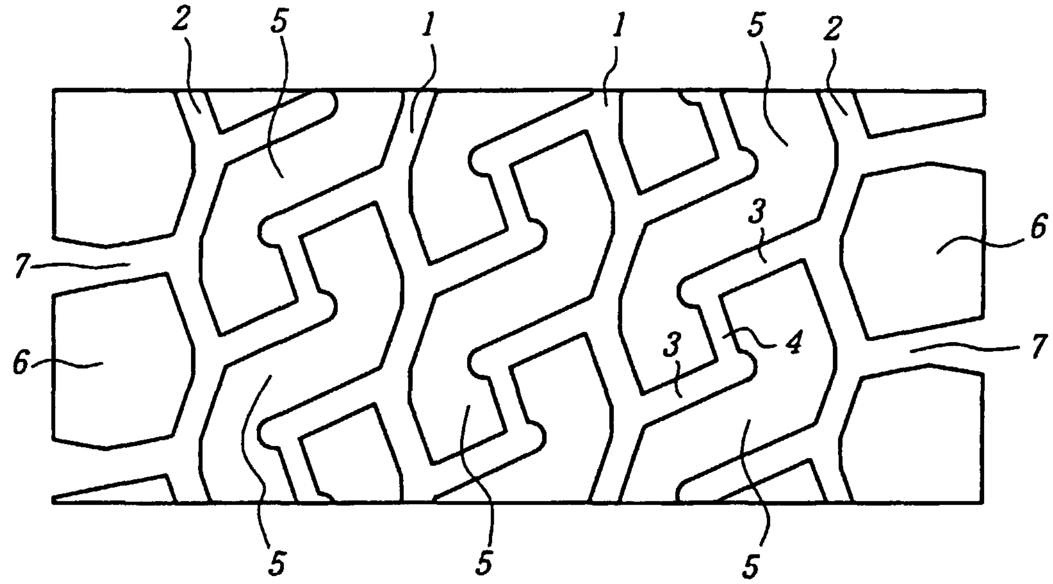


FIG. 6

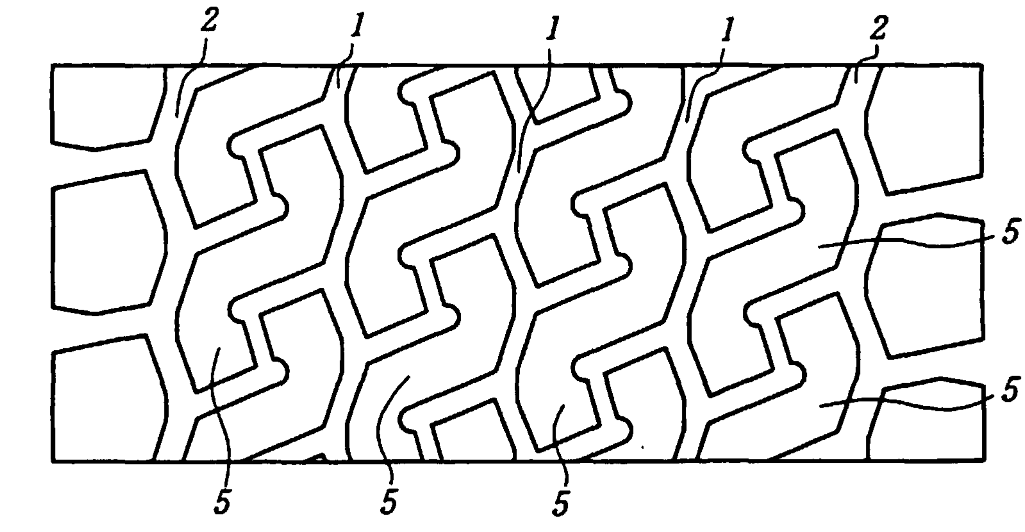

FIG. 7

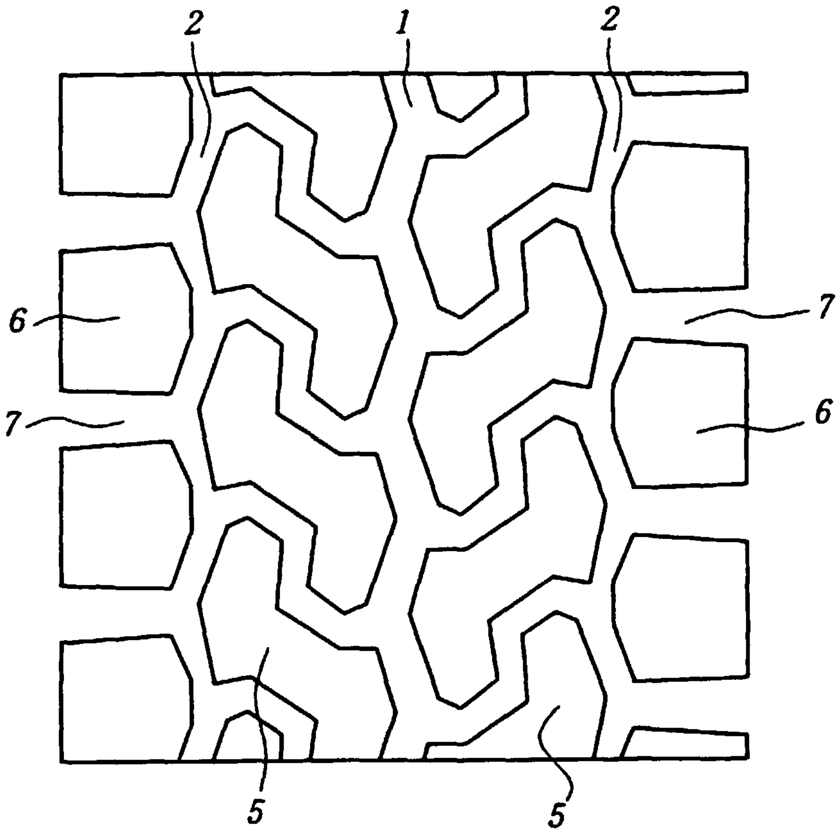

FIG. 8

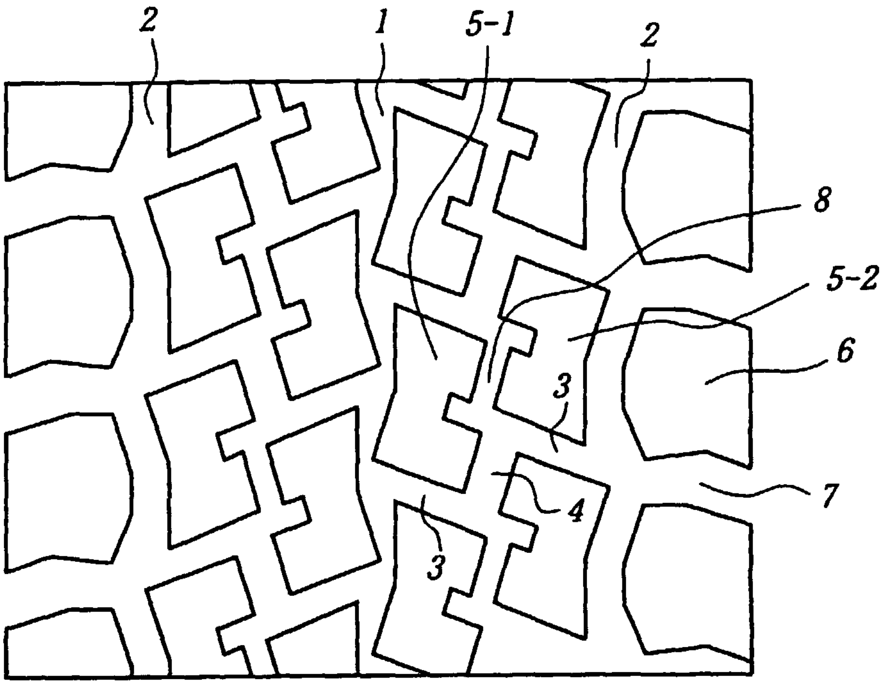

FIG. 9

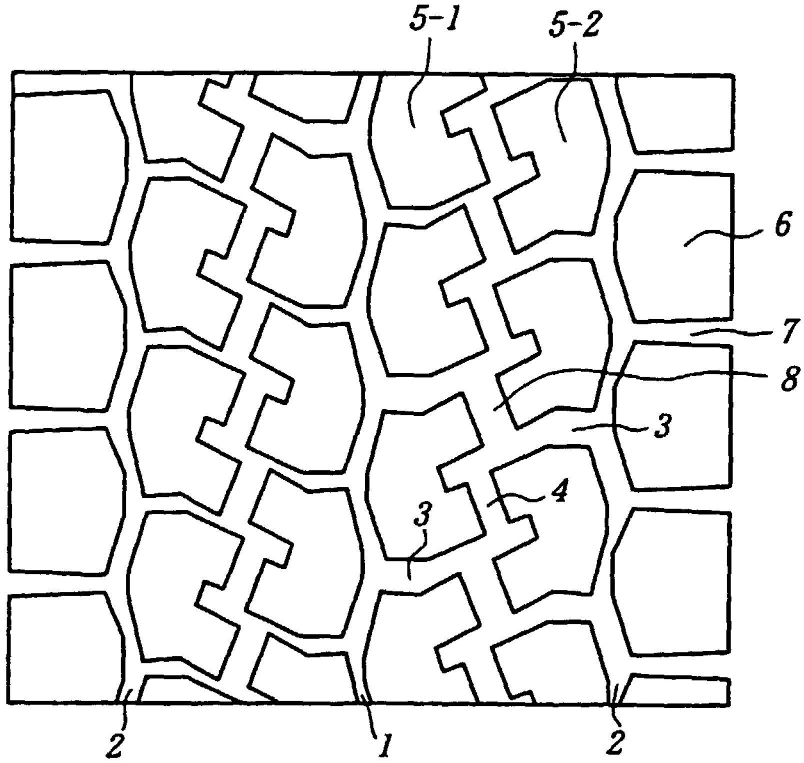


FIG. 10

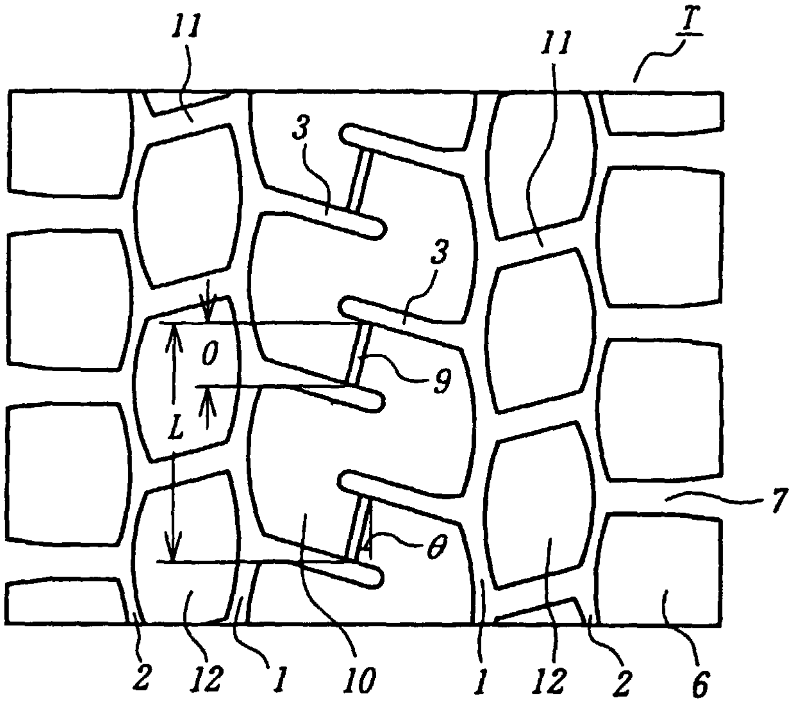

FIG. 11

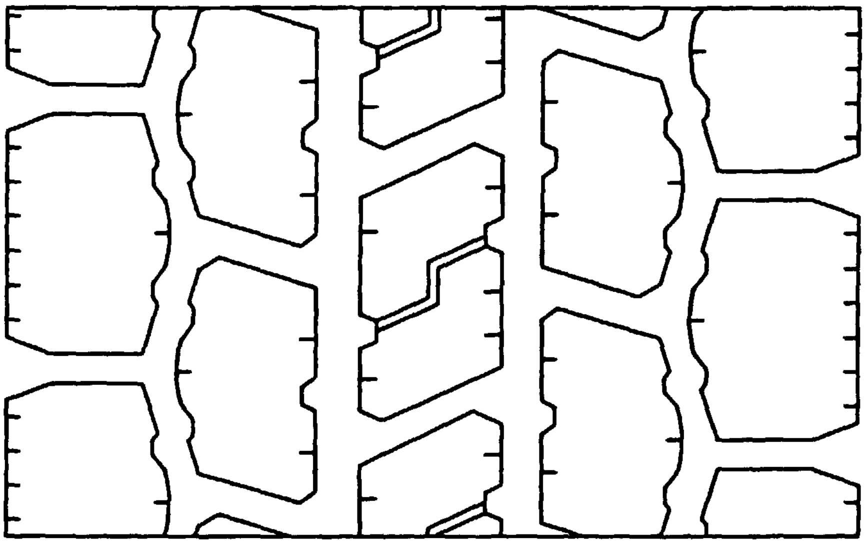

FIG. 12a

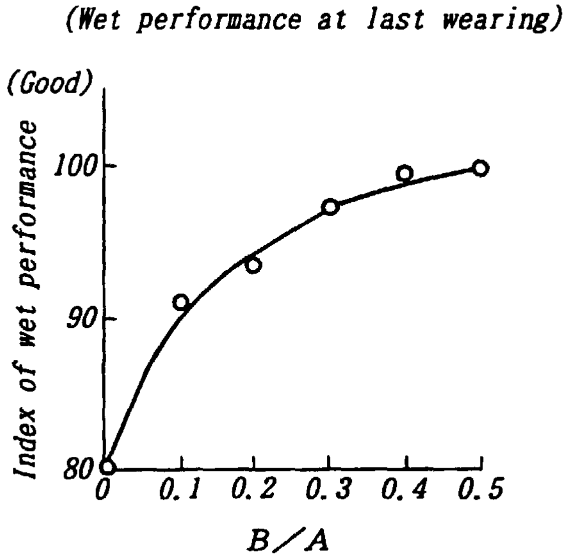


FIG. 12b

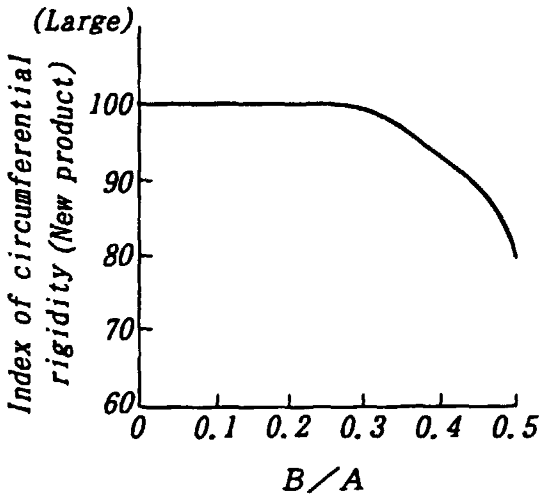

FIG. 13

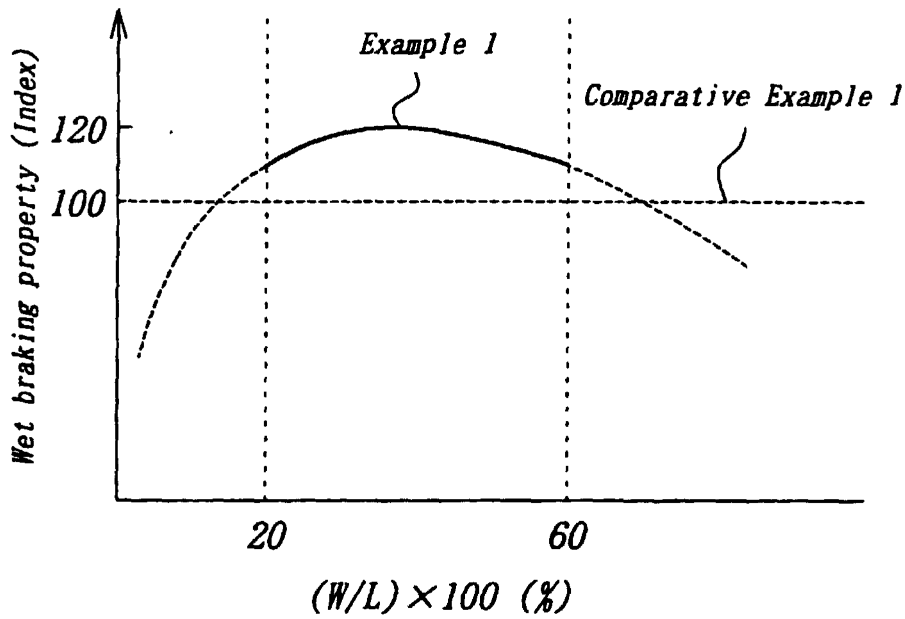
Example 1
Comparative Example 1
Wet braking property (Index)
120
100
20
60
(W/L)×100 (%)

FIG. 14

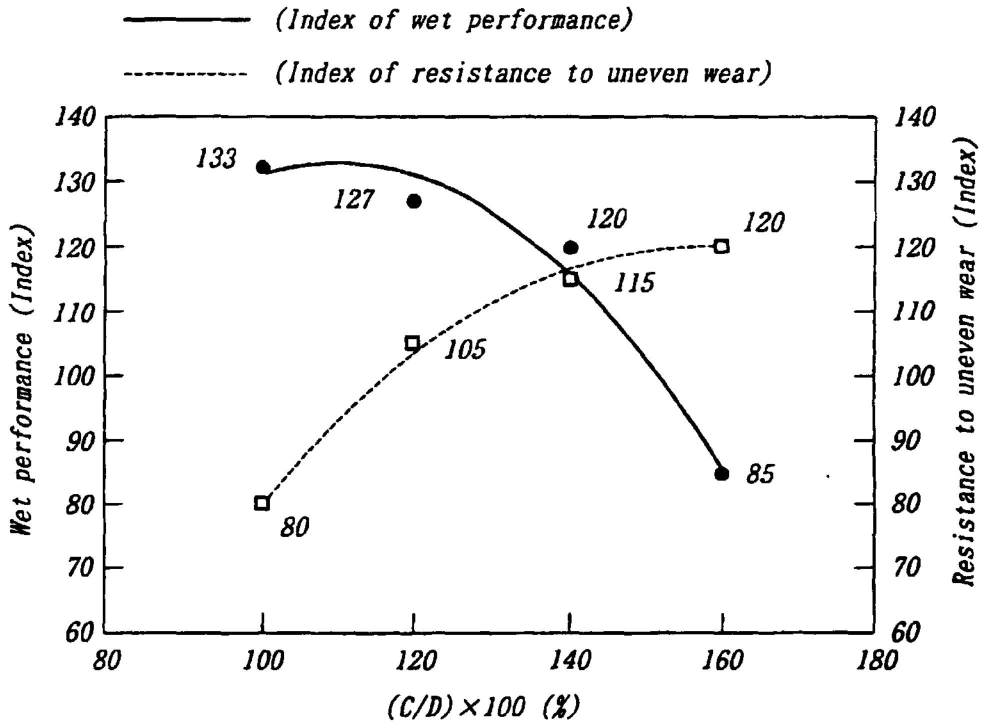
(Index of wet performance)
(Index of resistance to uneven wear)
Wet performance (Index)
Resistance to uneven wear (Index)
140
130
120
110
100
90
80
70
60
80
100
120
140
160
180
133
127
120
120
115
105
85
80
(C/D)×100 (%)

FIG. 15

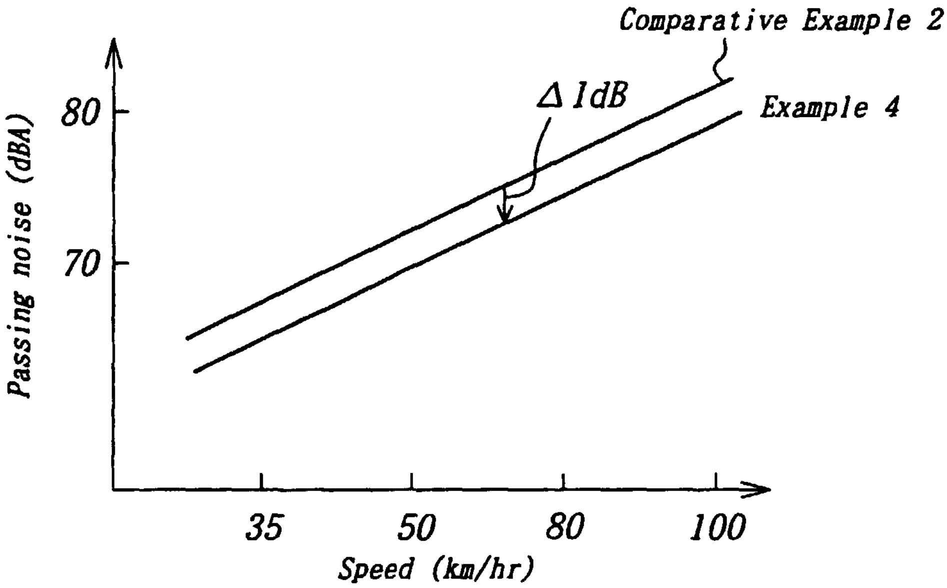
Comparative Example 2
Example 4
Δ 1dB
80
70
Passing noise (dBA)
35
50
80
100
Speed (km/hr)

## INTERNATIONAL SEARCH REPORT

International application No.
PCT/JP99/03932

A. CLASSIFICATION OF SUBJECT MATTER
Int.Cl$^6$ B60C11/11, 11/12

According to International Patent Classification (IPC) or to both national classification and IPC

B. FIELDS SEARCHED

Minimum documentation searched (classification system followed by classification symbols)
Int.Cl$^6$ B60C11/11, 11/12

Documentation searched other than minimum documentation to the extent that such documents are included in the fields searched
Jitsuyo Shinan Koho 1926-1996 Toroku Jitsuyo Shinan Koho 1994-1999
Kokai Jitsuyo Shinan Koho 1971-1999 Jitsuyo Shinan Toroku Koho 1996-1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP, 6-8711, A (Bridgestone Corp.), 18 January, 1994 (18. 01. 94), Par. Nos. [0007] to [0014] ; Fig. 1 (Family: none) | 1-3, 7-9<br>4-6, 10, 11 |
| X<br>A | JP, 6-171315, A (The Yokohama Rubber Co., Ltd.), 21 June, 1994 (21. 06. 94), Par. Nos. [0004] to [0011] ; Fig. 1 (Family: none) | 10, 11<br>1-9 |
| X<br>A | JP, 5-104909, A (Sumitomo Rubber Industries,Ltd.), 27 April, 1993 (27. 04. 93), Claim 1 ; Par. Nos. [0015], [0016], [0023] to [0012] ; Figs. 2, 4 (Family: none) | 1-3, 7-9<br>4-6, 10, 11 |
| X<br>A | JP, 61-261109, A (Bridgestone Corp.), 19 November, 1986 (19. 11. 86), Lower left column, lines 4 to 12 ; Fig. 1 & EP, 202122, A & US, 4723584, A | 1-3, 7-9<br>4-6<br>10, 11 |
| A | JP, 51-35904, A (Michelin & Cie), 26 March, 1976 (26. 03. 76), All references & FR, 2279575, A & US, 3971424, A | 1-11 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 6 October, 1999 (06. 10. 99) | 19 October, 1999 (19. 10. 99) |
| Name and mailing address of the ISA/<br>Japanese Patent Office | Authorized officer |
| Facsimile No. | Telephone No. |

Form PCT/ISA/210 (second sheet) (July 1992)